# EUROPEAN PATENT SPECIFICATION

(11) **EP 1 712 603 B1**
(45) Date of publication and mention of the grant of the patent: **03.12.2008**
(21) Application number: 06012188.6
(22) Date of filing: 23.04.2001
(51) Int. Cl.: C09J 7/02, B05D 5/10, B32B 7/12

(54) **Adhesive articles with improved air egress and methods of making the same**
Klebstoffartikel mit verbessertem Luftaustritt und Verfahren zu deren Herstellung
Articles adhésifs à evacuation d'air améliorée et leurs procédés de fabrication

(30) Priority: 24.04.2000 US 199244 P; 21.12.2000 US 742654; 21.12.2000 US 742646
(43) Date of publication of application: 18.10.2006
(62) Divisional of application: 01934895.2
(73) Proprietor: AVERY DENNISON CORPORATION, Pasadena, CA 91103 (US)
(72) Inventor: Hannington, Michael, Madison, Ohio 44057 (US); Iyer, Pradeep S., Hacienda Heights, Ohio 91745 (US)
(74) Representative: Müller-Boré & Partner Patentanwälte

(56) References cited:
- EP-A- 0 429 269
- EP-A- 0 491 099
- EP-A- 0 611 055
- WO-A-99/15600
- US-A- 3 331 729
- US-A- 4 556 595
- US-A- 4 721 638

## Description

This invention relates to adhesive articles and methods of making the same. The adhesive articles may be used for graphic images, such as those used on vehicles.

Pressure sensitive adhesives have enjoyed great acceptance for their convenience of use. The pressure sensitive adhesive is often used for tapes and articles containing graphic images. The advantages of the pressure sensitive adhesives are their strong bonding and simplicity of application. One drawback of these products is the initial tenacity of the pressure sensitive adhesive. The positioning of the product must be precise because of the initial strong bond of the adhesive. A need exists to make products using pressure sensitive adhesives which are repositionable, i.e. the product may be removed after light application of pressure without destroying the product or the substrate. Another need exists for the products to be able to slide. Slideability allows for correction of alignment of the product without the need of completely removing the product and possibly destroying the adhesive article or substrate.

When the product is a graphic image and is applied over an area like a wall or truck panel, there is the possibility of trapping air under the product and forming bubbles or wrinkles. The product must exhibit air egress, i.e. the ability of the product to provide a route for air trapped under the product to be removed.

US-patent 4,721,638 describes a sticking material having an adhesive layer, a second layer laminated on one main surface of the adhesive layer, a peeling agent layer laminated on the second layer and a first layer laminated on the peeling agent layer.

A need exists for products which have one or more of the desirable properties of air egress, repositionability and slideability.

This invention relates to an adhesive article which provides air egress. Air egress is provided by supplying at least one route, such as areas of no initial adhesion for the air to flow out from under the construction. The invention relates to an adhesive article comprising a facestock having a front surface and a back surface, a continuous layer of adhesive having an upper surface and a lower surface, wherein the upper surface of the adhesive layer is adhered to the back surface of the facestock, and a pattern of non-adhesive material forms that are in embedded into the upper surface of the adhesive layer. The invention further relates to methods of preparing the adhesive articles. These articles have usefulness as industrial graphics images, as well as decorative coverings, etc. The articles provide one or more of air egress, repositionability and slideability.

The method of making the adhesive articles of the present invention includes the steps of:

(a) applying a pattern of a non-adhesive material onto an adhesive layer that has been coated onto a release liner; (b) embedding the non-adhesive material into the adhesive layer; and (c) applying a facestock or a second release layer to the adhesive layer. The embedding and applying steps may be combined.

Fig. 1a, b and c are cross sectional areas of an adhesive article with a non-adhesive material embedded in the adhesive layer at the interface between the adhesive and the facestock.

Fig. 2a, b and c are cross sectional areas of an adhesive article with a porous non-adhesive material embedded in the adhesive layer at the interface between the adhesive and the facestock.

As described above, the present invention relates to adhesive articles such as those used for industrial graphics. The adhesive articles provide one or more of air egress, repositionability and slideability for easy application to a substrate.

The adhesive articles comprise a facestock, a continuous adhesive layer, and a non-adhesive material. The adhesive article further comprises a release liner releasably adhered to the adhesive layer. In one embodiment, the non-adhesive material includes non-adhesive polymers, including ink compositions applied by printing methods. In another embodiment, the non-adhesive material is applied by vacuum metalization or by sputtering. The non-adhesive material, after drying, cooling, and/or curing, adheres to the upper or lower surface of the adhesive layer. In one embodiment, the non-adhesive composition contains greater than 50%, or greater than 75%, or greater than 85% solids. In another embodiment, the non-adhesive composition is 100% solids.

In one embodiment, the non-adhesive material can be any material that can be used as the ink on a printing machine, provided that upon drying, cooling, and/or curing, the non-adhesive material is not tacky. The non-adhesive material may be made of organic polymeric material such as polyurethane, polyvinyl chloride, acrylic polymers, acetate, polyethylene, polypropylene or polystyrene and the like.

In one embodiment, the non-adhesive composition is a UV curable ink. The ultraviolet radiation curable inks useful in the invention generally comprise a binder which comprises one or more photopolymerizable monomers. The photopolymerizable monomers generally are ethylenically unsaturated compounds. The unsaturated compounds may contain one or more olefinic double bonds, and they may be low molecular weight compounds, (monomeric) or high molecular weight compounds (oligomeric). Illustrative examples of monomers containing one double bond are acrylates such as alkyl(meth)acrylates or hydroxyalkyl(meth)acrylates such as methyl-, ethyl-, butyl-, 2-ethylhexyl- or 2-hydroxyethylacrylate, isobornylacrylate, methyl- or ethylmethacrylate. Further examples of photopolymerizable monomers are acrylonitrile, acrylamide, methacrylamide, N-substituted (meth) acrylamides, vinyl esters such as vinyl acetate, vinyl ethers such as isobutylvinyl ether, styrene, alkylstyrenes and halostyrenes, N-vinylpyrrolidone, vinyl chloride or vinylidene chloride.

Monomers containing a plurality of double bonds are typically the diacrylates of ethylene glycol, 1,3-propylene glycol, 1,4-butaneodiol, 1,4-cyclohexane diol, neopentyl glycol, hexamethylene glycol, or bisphenol A polyacrylates such as trimethylolpropane triacrylate and pentaerythritol triacrylate or tetraacrylate, vinyl acrylate, divinyl benzene, divinyl succinate, diallyl phthalate, triallylphosphate, triallylisocyanurate or tris(2-acryloyloxy)ethyl-isocyanurate.

Typical examples of high molecular weight (oligomeric) polyunsaturated compounds are acrylated epoxy resins, acrylated polyethers, acrylated polyurethanes or acrylated polyesters. Further examples of unsaturated oligomers are unsaturated polyester resins which are normally prepared from maleic acid, phthalic acid and one or more diols and which have molecular weights of 500 to 3000. Such unsaturated oligomers may also be referred to as prepolymers. Single component systems based on photocurable prepolymers are often used as binders for printing inks. Unsaturated polyester resins are normally used in two-component systems together with a monounsaturated monomer such as described above, preferably with styrene.

The unsaturated compounds also can be used in admixture with non-photopolymerisable film-forming components. These components may typically be drying polymers or their solutions in organic solvents, such as nitrocellulose. They may also, however, be chemically curable or thermocurable resins such as polyisocyanates, polyepoxides or melamine resins. The concomitant use of thermocurable resins is important for use in so-called hybrid systems which are photopolymerised in a first step and crosslinked by a thermal after treatment in a second step.

The UV radiation curable inks also should contain at least one photoinitiator. A wide range of different photoinitiators is at present available for UV radiation curable systems. They include benzophenone and benzophenone derivatives, benzoin ethers, benzil ketals, dialkoxyacetophenones, hydroxyacetophenones, aminoacetophenones, haloacetophenones or acryloxyphosphine oxides. They differ in that they have different absorption maxima. To cover a wide absorption range it is possible to use a mixture of two or more photoinitiators. The total amount of photoinitiator in the UV radiation curable compositions may be in the range of from 0.05 to 7, or 10% by weight of the total composition. Preferably the compositions contain from 0.2% to 5% by weight of the photoinitiator.

Amines may be added to accelerate the photopolymerisation, for example triethanolamine, N-methyl-diethanolamine, p-dimethylaminobenzoate or Michler's ketone. The photopolymerisation can further be accelerated by the addition of photosensitisers which displace or broaden the spectral sensitivity. These photosensitisers are preferably aromatic carbonyl compounds such as thioxanthone, anthraquinone and 3-acyl-coumarin derivatives as well as 3-(aroylmethylene)- thiazolines.

Hindered amine light stabilizers (HALS) which function as co-stabilizers, also may be added to the UV radiation curable printing compositions used in the present invention. Examples of hindered amine light stabilizers include those listed and recited in U.S. Patent Nos. 5,112,890 and 4,636,408. A specific example of a hinder amine light stabilizer useful in the printing inks is Tinuvin 292 which is identified as bis(1,2,2,6,6-pentamethyl-4-piperidinyl) sebacate.

In addition to the above described binder materials and photoinitiators, the UV radiation curable inks used in the present invention may also contain coloring matter selected from organic pigments, inorganic pigments, body pigments and dyes which are known and have been used in this art. Examples of useful pigments include titanium dioxide, cadmium yellow, cadmium red, cadmium maroon, black iron oxide, carbon black, chrome green, gold, silver, aluminum and copper. Examples of dyes include alizarine red, Prussian blue, auramin naphthol, malachite green, etc. Generally the concentration of the pigment or dye in the ink will be from 0 to 70% by weight, and in one embodiment, from 0.1% to 50% by weight.

In addition to the above described coloring matter, the UV radiation curable inks used in the present invention may also contain fillers, extenders, surfactants, and the like which are known and have been used in this art. Examples of useful fillers and extenders include silicon dioxide, fumed silica, glass or ceramic microspheres, and glass or ceramic bubbles. Generally the concentration of the filler or extender will be from 0 to 70% by weight, and in one embodiment, from 0.5% to 50% by weight.

The printing inks may also contain at least one UV absorber which provides weathering protection and helps prevent microcracking. The amount of UV absorber included in the UV radiation curable ink should be maintained at a practical minimum since the presence of the UV absorber may increase the curing rate. A variety of UV absorbers are known and useful in the present invention and these include UV absorbers belonging to the group of photopolymerisable hydroxybenzophenones and photopolymerisable benzotriazoles. U.S. 5,369,140 describes a class of 2-hydroxyphenyl-s-triazines that are useful as UV absorbers for radiation curable systems. The triazines are effective for stabilizing cured films when exposed to sunlight over a long period of time, and these stabilizers do not interfere with UV radiation curing of the inks. The triazine UV absorbers are effective in amounts of from 0.1 to 2% by weight. The UV absorbers may be used in combination with other light stabilizers such as sterically hindered amines. U.S. Patents 5,559,163 and 5,162,390 also describe UV absorbers which are useful in the inks of the present invention.

Examples of useful UV curable inks include those available from Decochem under the trade designation Poly-Rad plastics, as well as UV curable inks commercially available from Acheson and Daw Chemical Company.

In one embodiment of the invention, the ink used to form the non-adhesive material on the adhesive layer is a coalescing ink. The ink does not efficiently wet out on the surface of the adhesive, but coalesces into smaller areas of ink with an increase in height. Thus, depending on the degree of coalescence, a line of printed ink can form a narrower line, or a line made up of what appear to be random small beads of ink, or a combination, all with an increase in height. The narrower line, small beads, or combination are then embedded into the adhesive. The thickness of the ink applied to the surface of the adhesive layer can also affect the degree of coalescence. Surfactants may be added to the ink composition to control the degree of coalescence as well.

In one embodiment of the invention, the ink used to form the non-adhesive material comprises a porous non-adhesive. The porous non-adhesive may have elastomeric properties, so that if it is compressed, it essentially returns to its original shape. For example the porous non-adhesive comprises an ink containing a blowing agent that causes the ink to expand, forming an open or closed cell, or combination thereof. The blowing agent is activated, for example, by the application of heat to the ink. Other examples of porous non-adhesives include suspensions of gas and/or particles in a binder. The porous non-adhesive is then embedded into the adhesive layer. The porous non-adhesive fills the depression created in the embedding step, resulting in a facestock layer having a smooth outer appearance.

The non-adhesive material is generally present in a pattern. The pattern can be a plurality of dots, lines, or any geometric figure, that provides a path for air egress from the adhesive article. When lines are used, at least 50% of the pattern should extend to the edge of the adhesive article to obtain acceptable air egress. The lines and dots may vary in size provided that air egress is maintained. The lines and other patterns generally have an average thickness from 0.3µ to 100µ, or from 0.5µ to 50µ, or from 2µ to 20µ. The width of the lines may also vary widely. An example of a useful range for line width is from 12µ to 250µ, or from 25µ to 125µ, or from 50µ to 75µ. The pattern may be a grid of intersecting lines, a weave pattern, a waffle pattern, diagonal straight and curved lines, tiled geometric figures, such as hexagons, rectangles, overlapping circles or triangles, or lines in a cross hatch pattern. Combinations of patterns may be used such as a grid of intersecting lines with random or patterned dots. The non-adhesive material may be applied by any means.

In one embodiment, the non-adhesive material is an ink comprising a UV curable polymer composition, such as a UV curable acrylic or polyurethane composition. After application, the ink is cured by irradiation in a UV exposure apparatus as is well known to those skilled in the art of printing and UV curing. UV light sources such as low pressure mercury lamps, high pressure mercury lamps, xenon lamps, arc lamps and gallium lamps are useful. It is also possible, but not necessary, to improve the curability of the ink by heating after irradiation.

In one embodiment, the non-adhesive material is a polymer composition which is able to be printed by any suitable printing technique such as screen printing, roller coat printing, flexographic printing, lithographic printing, gravure printing, laser printing, ink jet printing, brushing, spraying, dipping or coating. The type of printing may be any type which can print on the pressure sensitive adhesive. One particularly useful printing method is a modification of flexographic printing which provides both the printing and embedding of the non-adhesive material.

In one embodiment, the non-adhesive layer is a printing ink having a thickness from 0.3 to 100 microns, from 0.5 to 50 microns, or from 2 to 20 microns. The non-adhesive material may also be applied to the pressure sensitive adhesive by means of patterned vacuum metallization or sputtering. In this embodiment, the non-adhesive layer typically has a thickness from 30 to 3000, from 100 to 2000, or from 300 to 1500 nanometers.

As described above, the adhesive article has a facestock, an adhesive layer, a plurality of non-adhesive material and optionally the construction has a release liner. The facestock may be any of those which are useful for decorative or graphic image applications. The facestocks typically have a thickness from 10 to 300, or from 25 to 125 microns. The facestocks include paper, polyolefins (linear or branched), polyamides, polystyrenes, nylon, polyesters, polyester copolymers, polyurethanes, polysulfones, polyvinylchloride, styrene-maleic anhydride copolymers, styrene-acrylonitrile copolymers, ionomers based on sodium or zinc salts of ethylene methacrylic acid, polymethyl methacrylates, cellulosics, fluoroplastics, acrylic polymers and copolymers, polycarbonates, polyacrylonitriles, and ethylene-vinyl acetate copolymers. Included in this group are acrylates such as ethylene methacrylic acid, ethylene methyl acrylate, ethylene acrylic acid and ethylene ethyl acrylate. Also, included in this group are polymers and copolymers of olefin monomers having, for example, 2 to 12 carbon atoms, and in one embodiment 2 to 8 carbon atoms. These include the polymers of alpha-olefins having from 2 to 4 carbon atoms per molecule. These include polyethylene, polypropylene, poly-1-butene, etc. An example of a copolymer within the above definition is a copolymer of ethylene with 1-butene having from 1 to 10 weight percent of the 1-butene comonomer incorporated into the copolymer molecule. The polyethylenes that are useful have various densities including low, medium and high density ranges. The low density range is from 0.910 to 0.925 g/cm³; the medium density range is from 0.925 to 0.940 g/cm³; and the high density range is from 0.94 to 0.965 g/cm³. Films prepared from blends of copolymers or blends of copolymers with homopolymers also are useful. The films may be extruded as a monolayer film or a multi-layered film.

In one embodiment, the first facestock is a polymeric facestock, which contains migratory additives. The facestocks are preferably polyvinylchloride facestocks. The additives include plasticizers and antioxidants. The plasticizer is a high-boiling solvent or softening agent, usually liquid. It is an ester made from an anhydride or acid and a suitable alcohol that usually has between 6 to 13 carbon atoms. The plasticizers may be adipate, phosphate, benzoate or phthalate esters, polyalkylene oxides, sulfonamides, etc. The plasticizers include but are not limited to DOA plasticizer (dioctyl adipate), TEG-EH plasticizer (triethylene glycol di-2-ethylhexanoate), TOTM plasticizer (trioctyl trimellitate), triacetin plasticizer (glyceryl triacetate), TXIB plasticizer (2,2,4-trimethyl-1,3 -pentanediol diisobutyrate), DEP plasticizer (diethyl phthalate), DOTP plasticizer (dioctyl terephthalate), DMP plasticizer (dimethyl phthalate), DOP plasticizer (dioctyl phthalate), DBP plasticizer (dibutyl phthalate), polyethylene oxide, toluenesulfonamide,dipropylene glycol benzoate, and the like.

The adhesive articles have a continuous adhesive layer, typically a pressure sensitive adhesive layer. In some applications; the adhesive may be a heat activated adhesive, as distinguished from a pressure sensitive adhesive. The adhesive layer typically has a thickness from 10 to 125, or from 25 to 75, or from 10 to 50 microns. In one embodiment, the coat weight of the pressure sensitive adhesive is in the range of 10 to 50 grams per square meter (gsm), and in one embodiment 20 to 35 gsm. The pressure-sensitive adhesive can be any pressure sensitive adhesive known in the art. These include rubber based adhesives, acrylic adhesives, vinyl ether adhesives, silicone adhesives, and mixtures of two or more thereof. Included are the pressure sensitive adhesive materials described in "Adhesion and Bonding", Encyclopedia of Polymer Science and Engineering, Vol. 1, pages 476-546, Interscience Publishers, 2nd Ed. 1985. The pressure sensitive adhesive materials that are useful may contain as a major constituent an adhesive polymer such as acrylic type polymers, block copolymers, natural, reclaimed or styrene butadiene rubbers, tackified natural or synthetic rubbers, random copolymers of ethylene and vinyl acetate, ethylene-vinyl-acrylic terpolymers, polyisobutylene, poly(vinyl ether), etc. The pressure sensitive adhesive materials are typically characterized by glass transition temperatures in the range of -70°C to 10°C.

Other materials in addition to the foregoing resins may be included in the pressure sensitive adhesive materials. These include solid tackifying resins, liquid tackifiers (often referred to as plasticizers), antioxidants, fillers, pigments, waxes, etc. The adhesive materials may contain a blend of solid tackifying resins and liquid tackifying resins (or liquid plasticizers). Particularly useful adhesives are described in US 5,192,612 and 5,346,766.

The pressure sensitive adhesive can be applied using standard coating techniques, such as curtain coating, gravure coating, reverse gravure coating, offset gravure coating, roller coating, brushing, knife-over roll coating, air knife coating metering rod coating, reverse roll coating, doctor knife coating, dipping, die coating, spraying, and the like. The application of these coating techniques is well known in the industry and can effectively be implemented by one skilled in the art. The knowledge and expertise of the manufacturing facility applying the coating determine the preferred method. Further information on coating methods can be found in "Modern Coating and Drying Technology", by Edward Cohen and Edgar Gutoff, VCH Publishers, Inc., 1992.

Release liners for use in the present invention may be those known in the art. In general, useful release liners include polyethylene coated papers with a commercial silicone release coating, polyethylene coated polyethylene terephthalate films with a commercial silicone release coating, or cast polypropylene films that can be embossed with a pattern or patterns while making such films, and thereafter coated with a commercial silicone release coating. A preferred release liner is kraft paper which has a coating of low density polyethylene on the front side with a silicone release coating and a coating of high density polyethylene on the back side. Other release liners known in the art are also suitable as long as they are selected for their release characteristics relative to the pressure sensitive adhesive chosen for use in the present invention. In one embodiment of the invention, the release liner has a moldable layer of polymer under the release coating. The moldable layer is typically a polyolefin, such as polyethylene or polypropylene. The surface of the release layer of the release liner has a textured finish. The release layer may have a randomly microstructured surface such as a matte finish, or have a pattern of three-dimensional microstructures. The microstructures may have a cross-section which is made up of circles, ovals, diamonds, squares, rectangles, triangles, polygons, lines or irregular shapes, when the cross-section is taken parallel to the surface of the release surface.

In one embodiment, the release liner has a release coating on both sides; one side having a release coating of a higher release value than the release coating of the other side.

In one embodiment, the adhesive layer of the articles has a Sheffield roughness of at least 10 or at least 75, or at least 150. The adhesive layer may itself have the roughness or may be formed when the adhesive is coated onto a release liner. It is understood that the release liner may have a Sheffield roughness at least 10 or at least 50, or at least 75 or at least 150. The adhesive will replicate the complementary texture or pattern of the release liner. Alternatively, the release liner can be much rougher depending on the configuration of the adhesive article. The Sheffield roughness is determined by TAPPI T 538 om-88.

Applicant has discovered that the addition of the non-adhesive material either on or in the adhesive layer provides improved air egress. The non-adhesiveis embedded so that its outer surface is even with or below the plane of the adhesive surface (i.e., within the adhesive layer). When the non-adhesive material is embedded to a level even with the plane of the adhesive layer, the non-adhesive material provides air egress along the interface. This is particularly true for the smaller bubbles which form as the natural result of laying the adhesive construction onto a substrate. Even when applied properly, small bubbles are still formed. The air in these bubbles needs a route to egress. The interface of the non-adhesive material and the substrate is the area where this occurs. When the non-adhesive material extends beyond the adhesive layer, the non-adhesive material provides repositionability and/or slideability as well as air egress. This is of particular advantage when applying adhesive articles to surfaces that are above room temperature. The amount of the non-adhesive material extending below the adhesive layer needs to be only sufficient to prevent contact of the adhesive layer with the substrate.

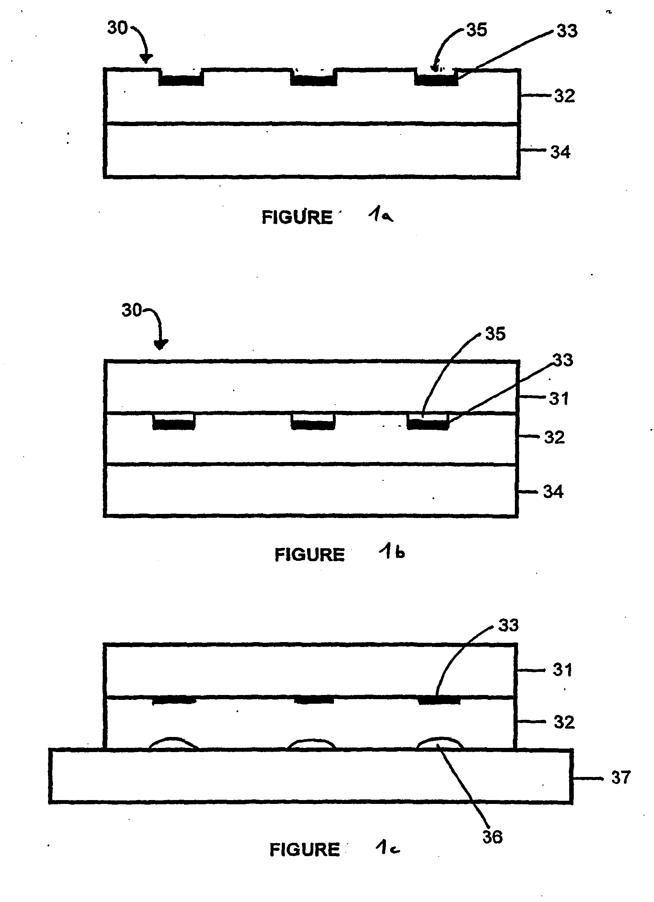

The invention is further described by referring to the Figures. Referring to Figure 1a,

an adhesive article 30 having improved air egress is provided by simultaneously printing and embedding a pattern of non-adhesive areas 33 into the surface of an adhesive 32 on a release liner 34. Using flexographic printing techniques, a pattern, such as diamonds, is printed into the exposed surface of an adhesive 32 on a release liner 34. The non-adhesive material 33 is a non-adhesive resin which upon drying, cooling, and/or curing maintains its shape. The printing technique embeds the print into the soft surface of the adhesive 32, leaving channels 35 with most of the printing compound on the bottom of the channels. Thus, the top surface of the printing compound 33 is below the plane of the upper surface of the adhesive layer 32. The non-adhesive material 33 is chosen from those materials that prevent the adhesive from flowing back into the channels 35 created by the printing process. Examples of such non-adhesive materials include hard PMMA, or a two component urethane. Referring to Figure 1b, the printed adhesive 32 with channels 35 is transferred by lamination to a facestock 31, maintaining the channels in the adhesive. Upon removal of the release liner 34 and application of the exposed adhesive to the surface of substrate 37 using pressure the channels 35 collapse or partially collapse, forming voids 36 at the interface between the adhesive 32 and the substrate 37, allowing trapped air to move to the exposed edges, as illustrated in Figure 1c.

In one embodiment of the present invention, the adhesive article is prepared by applying a non-adhesive material to the adhesive surface of an adhesive article. The non-adhesive material may be fully or partially embedded into the adhesive surface. Embedding may be carried out using pressure and/or heated rollers or a platen, whereby the non-adhesive material is pressed into the adhesive surface. The roller may be a silicone rubber roller. Embedding into the adhesive typically occurs at a temperature from 18.3 to 95.3°C (65° to 200°F), or from 37.1°C to 65.6°C (100° to 150°F). The embedding pressure for embedding into the adhesive is typically between 1.03 to 6.89 bar (15 to 100 psi), or from 1.72 to 3.45 bar (25 to 50 psi). Alternatively, the non-adhesive material may be embedded into the adhesive layer by applying with pressure another layer, such as a release liner or facestock layer onto the non-adhesive patterned surface of the adhesive layer. The non-adhesive material may also be embedded into the adhesive layer by winding up the adhesive layer coated onto a facestock or release liner so that the non-adhesive material is embedded into the adhesive layer when the exposed surface of the adhesive contacts the outer surface of the facestock or release liner. The non-adhesive material will generally be embedded at a level of at least 50%, or at least 75%, or at least 85% of the thickness of the non-adhesive material, or embedded to a level equal to the surface of the embedding media.

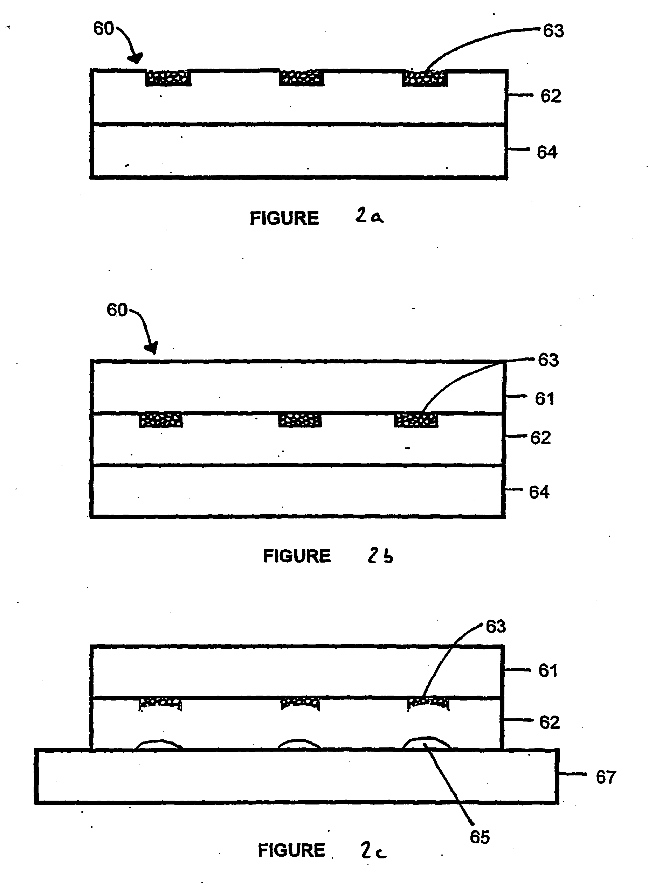

Figures 2a-c illustrate another embodiment. An adhesive article having improved air egress, characteristics as well as improved facestock smoothness is provided by simultaneously printing and embedding a pattern of non-adhesive material into an adhesive on a release liner. The non-adhesive material pattern may be printed and embedded by using flexographic printing techniques. The non-adhesive material is subsequently foamed to form a porous non-adhesive. The porous non-adhesive partially, completely, or overly fills the channels in the adhesive. Referring to Figure 2a, a pattern of non-adhesive material 63 is printed into the exposed surface of an adhesive 62 on a release liner 64. The printing technique presses the non-adhesive material 63 into the soft surface of the adhesive 62, leaving a pattern with most of the non-adhesive material 63 on the bottom of the channel. The non-adhesive material 63 is comprised of a resin which upon drying, cooling, and/or curing is foamed to partially or completely fill the channel. Referring to Figure 2b, the printed adhesive with the porous non-adhesive channels is transferred by lamination to a facestock 61. Referring to Figure 2c, upon removal of the release liner 64 and application of the exposed adhesive 62 to a substrate surface 67 with pressure, the porous non-adhesive 63 in the channel collapses slightly, forming voids 65 at the interface between the adhesive 62 and the substrate 67, allowing trapped air to move to the exposed edges. Removal of the application pressure allows the foamed print to return to its original uncompressed shape, removing texture from the surface of the facestock 61.

In another embodiment, a random pattern of non-adhesive particulates, such as for example, glass beads, can be applied to the surface of the adhesive layer and then partially or fully embedded into the adhesive layer. The non-adhesive particulate, in addition to glass, may be made of organic and inorganic particles, including but not limited to polymers, ceramics and metals. The non-adhesive particulate may be spherical, cubic, irregularly shaped, solid, porous, hollow, elastic or inelastic. Alternatively, the randomly distributed non-adhesive particulate material may be applied to and then partially or fully embedded into the release liner.

In another embodiment, non-adhesive material is applied to and embedded into the upper surface of the adhesive layer. The release liner also has a pattern of non-adhesive material printed thereon. The printed non-adhesive material may be embedded into the surface of the release liner prior to applying the adhesive onto the release liner. Upon removal of the release liner from the adhesive, the non-adhesive material is transferred to the adhesive layer.

In yet another embodiment, non-adhesive material is applied to and embedded into the upper surface of the adhesive layer. The release liner has randomly distributed non-adhesive particulate material applied to its release surface. The particulate non-adhesive material may be embedded into the surface of the release liner prior to applying the adhesive onto the release liner. Upon removal of the release liner from the adhesive, the non-adhesive material is transferred to the adhesive layer.

Another embodiment of the method of making the adhesive articles of the present invention includes the steps of: (a) applying a pattern of a non-adhesive material onto an adhesive layer that has been coated onto a release liner; (b) embedding the non-adhesive material into the adhesive layer; and (c) applying an additional release liner with a higher or lower release to the adhesive layer. The embedding and applying steps may be combined. The additional release liner may be omitted if the initial release liner has a release means on both surfaces. These embodiments are commonly known as transfer adhesives or adhesive sandwiches.

While the invention has been explained in relation to its preferred embodiments, it is to be understood that various modifications thereof will become apparent to those skilled in the art upon reading the specification. The features of the various embodiments of the adhesive articles described herein may be combined into within an adhesive article. The various methods of manufacturing the adhesive articles of the present invention described herein may also be combined. Therefore, it is to be understood that the invention disclosed herein is intended to cover such modifications as fall within the scope of the appended claims.

## Claims

1. An adhesive article comprising:
a facestock having a front surface and a back surface;
a continuous layer of adhesive having an upper surface and a lower surface and end edges, wherein the upper surface of the adhesive is adhered to the back surface of the facestock; and
a pattern of non-adhesive material forms embedded into the upper surface of the adhesive layer, each of said non-adhesive material forms having a top surface, wherein the top surfaces of the non-adhesive material forms are even with or below the plane of the upper surface of the adhesive layer, and a release liner having a release surface, wherein said release surface is adhered to the lower surface of the adhesive layer.
wherein the release surface of the release liner has a textured surface, particularly a random texture or a patterned finish, and
wherein the lower surface of the adhesive layer has a textured surface corresponding to the textured surface of the release liner.

2. The adhesive article of claim 1, wherein the non-adhesive material forms have an average thickness of 30 nanometers to 100µ.

3. The adhesive article of claim 1 or 2, wherein the non-adhesive material comprises a UV curable ink or a porous non-adhesive material which particularly comprises an elastomer.

4. The adhesive article of anyone of claims 1 to 3, wherein the pattern of non-adhesive material forms comprises a plurality of dots, lines or combinations thereof.

5. The adhesive article of claim 4, wherein the lines of non-adhesive material have an average width of from 12µ to 250µ and an average thickness of from 30 nanometers to 100µ.

6. The adhesive article of claim 4 or 5, wherein at least 50% of the lines intersect the end edges of the adhesive layer.

7. The adhesive article of claim 4, 5 or 6, wherein the plurality of lines form a grid pattern.

8. The adhesive article of anyone of claims 1 to 7, wherein the adhesive layer comprises a pressure sensitive adhesive or a heat-activated adhesive.

9. The adhesive article of anyone of claims 1 to 8, wherein the article is wound so that the lower surface or the adhesive is in adhesive contact with the front surface of the facestock.

10. The adhesive article of claim 9, wherein the front surface of the facestock has a release surface.

11. The adhesive article of anyone of claims 1 to 10, wherein the release surface of the release liner has randomly distributed non-adhesive particulate material thereon.

12. The adhesive article of claim 11, wherein the randomly distributed non-adhesive particulate material is at least partially embedded into the release surface.

13. The adhesive article of anyone of claims 1 to 10, wherein the release surface of the release liner has a non-adhesive material printed thereon.

14. The adhesive article of claim 13, wherein the non-adhesive material printed on the release surface of the release liner is embedded into the release surface.

15. The adhesive article of anyone of claims 1 to 14, further comprising a second adhesive layer having an upper and lower surface, said lower surface adhered to the front surface of the facestock.

16. The adhesive article of claim 15, wherein a pattern of non-adhesive material forms is embedded into the lower surface of the second adhesive layer, each of said non-adhesive material forms having a bottom surface, wherein the bottom surfaces of the non-adhesive material forms are even with or above the plane of the lower surface of the second adhesive layer.

17. An adhesive article comprising:
a release liner having a release surface and a back surface as defined above;
a continuous layer of adhesive as defined above and having an upper surface and a lower surface and end edges, wherein the upper surface of the adhesive is adhered to the release surface of the release liner; and
a pattern of non-adhesive material forms as defined above and being embedded into the lower surface of the adhesive layer, each of said non-adhesive material forms having a bottom surface, wherein the bottom surfaces of the non-adhesive material forms are even with, above, or below the plane of the lower surface of the adhesive layer,
wherein the back surface of the release liner has a release coating thereon, the release coating having a higher release value than that of the release surface.

18. The adhesive article of claim 17, wherein the article is wound so that the patterned lower surface of the adhesive is in adhesive contact with the back surface of the release liner.

19. The adhesive article of claim 17 or 18, wherein the lower surface of the adhesive layer has randomly distributed non-adhesive particulate material embedded therein.

20. A method of making an adhesive article according to claims 17 to 19, comprising the steps:
providing a construction comprising a release liner having a release surface and a bad surface, and a layer of adhesive having an upper and lower surface, wherein the upper surface of the adhesive layer is in releasable contact with the release surface of the release liner;
applying a pattern of a non-adhesive material to the lower surface of the adhesive layer; and
embedding the non-adhesive material into the adhesive layer.

21. The method of claim 20, further comprising applying a facestock to the lower surface of the adhesive layer.

## Patentansprüche

1. Klebegegenstand, umfassend:
ein Obermaterial mit einer vorderen Oberfläche und einer hinteren Oberfläche;
eine kontinuierliche Klebstoffschicht mit einer oberen Oberfläche und einer unteren Oberfläche und Endkanten, wobei die obere Oberfläche des Klebstoffs an die hintere Oberfläche des Obermaterials geklebt ist; und
ein Muster von Formen aus nicht-klebendem Material, die in die obere Oberfläche der Klebstoffschicht eingebettet sind, wobei jede der Formen aus nicht-klebendem Material eine Deckoberfläche aufweist, wobei die Deckoberflächen der Formen aus nicht-klebendem Material auf gleicher Höhe mit oder unter der Ebene der oberen Oberfläche der Klebstoffschicht liegen,
und eine Trennlage mit einer Trennoberfläche, wobei die Trennoberfläche an die untere Oberfläche der Klebstoffschicht geklebt ist,
wobei die Trennoberfläche der Trennlage eine strukturierte Oberfläche, insbesondere eine ungeordnete Struktur oder ein gemustertes Finish aufweist,
wobei die untere Oberfläche der Klebstoffschicht eine strukturierte Oberfläche aufweist, die der strukturierten Oberfläche der Trennlage entspricht.

2. Klebegegenstand nach Anspruch 1, wobei die Formen aus nicht-klebendem Material eine mittlere Dicke von 30 Nanometern bis 100 µ aufweisen.

3. Klebegegenstand nach Anspruch 1 oder 2, wobei das nicht-klebende Material eine durch UV-Licht aushärtbare Druckfarbe oder ein poröses nicht-klebendes Material, das insbesondere ein Elastomer umfasst, umfasst.

4. Klebegegenstand nach einem der Ansprüche 1 bis 3, wobei das Muster von Formen aus nicht-klebendem Material eine Mehrzahl von Punkten, Linien oder Kombinationen davon umfasst.

5. Klebegegenstand nach Anspruch 4, wobei die Linien aus nicht-klebendem Material eine mittlere Breite von 12 µ bis 250 µ und eine mittlere Dicke von 30 Nanometern bis 100 µ aufweisen.

6. Klebegegenstand nach Anspruch 4 oder 5, wobei mindestens 50% der Linien die Endkanten der Klebstoffschicht schneiden.

7. Klebegegenstand nach Anspruch 4, 5 oder 6, wobei die Mehrzahl von Linien ein Gittermuster bildet.

8. Klebegegenstand nach einem der Ansprüche 1 bis 7, wobei die Klebstoffschicht einen Haftklebstoff oder einen wärmeaktivierten Klebstoff umfasst.

9. Klebegegenstand nach einem der Ansprüche 1 bis 8, wobei der Gegenstand derart aufgewickelt ist, dass die untere Oberfläche des Klebstoffs mit der vorderen Oberfläche des Obermaterials in Klebekontakt ist.

10. Klebegegenstand nach Anspruch 9, wobei die vordere Oberfläche des Obermaterials eine Trennoberfläche aufweist.

11. Klebegegenstand nach einem der Ansprüche 1 bis 10, wobei die Trennoberfläche der Trennlage ein statistisch verteiltes nicht-klebendes teilchenförmiges Material darauf aufweist.

12. Klebegegenstand nach Anspruch 11, wobei das statistisch verteilte nicht-klebende teilchenförmige Material zumindest teilweise in die Trennoberfläche eingebettet ist.

13. Klebegegenstand nach einem der Ansprüche 1 bis 10, wobei die Trennoberfläche der Trennlage ein darauf gedrucktes nicht-klebendes Material aufweist.

14. Klebegegenstand nach Anspruch 13, wobei das auf die Trennoberfläche der Trennlage gedruckte nicht-klebende Material in die Trennoberfläche eingebettet ist.

15. Klebegegenstand nach einem der Ansprüche 1 bis 14, ferner umfassend eine zweite Klebstoffschicht mit einer oberen und unteren Oberfläche, wobei die untere Oberfläche an die vordere Oberfläche des Obermaterials geklebt ist.

16. Klebegegenstand nach Anspruch 15, wobei ein Muster von Formen aus nicht-klebendem Material in die untere Oberfläche der zweiten Klebstoffschicht eingebettet ist, wobei jede der Formen aus nicht-klebendem Material eine Bodenoberfläche aufweist, wobei die Bodenoberflächen der Formen aus nicht-klebendem Material in gleicher Höhe mit oder über der Ebene der unteren Oberfläche der zweiten Klebstoffschicht liegen.

17. Klebegegenstand, umfassend
eine Trennlage mit einer Trennoberfläche und einer hinteren Oberfläche wie vorstehend definiert;
eine kontinuierliche Klebstoffschicht wie vorstehend definiert und mit einer oberen Oberfläche und einer unteren Oberfläche und Endkanten, wobei die obere Oberfläche des Klebstoffs an die Trennoberfläche der Trennlage geklebt ist; und
ein Muster von Formen aus nicht-klebendem Material wie vorstehend definiert und eingebettet in die untere Oberfläche der Klebstoffschicht, wobei jede der Formen aus nicht-klebendem Material eine Bodenoberfläche aufweist, wobei die Bodenoberflächen der Formen aus nicht-klebendem Material in gleicher Höhe mit, über oder unter der Ebene der unteren Oberfläche der Klebstoffschicht liegen,
wobei die hintere Oberfläche der Trennlage eine Trennbeschichtung darauf aufweist, wobei die Trennbeschichtung einen höheren Trennwert als derjenige der Trennoberfläche aufweist.

18. Klebegegenstand nach Anspruch 17, wobei der Gegenstand derart aufgewickelt ist, dass die gemusterte untere Oberfläche des Klebstoffs mit der hinteren Oberfläche der Trennlage in Klebekontakt ist.

19. Klebegegenstand nach Anspruch 17 oder 18, wobei die untere Oberfläche der Klebstoffschicht darin eingebettetes statistisch verteiltes nicht-klebendes teilchenförmiges Material aufweist.

20. Verfahren zur Herstellung eines Klebegegenstands nach den Ansprüchen 17 bis 19, umfassend die Schritte:
Bereitstellen einer Konstruktion, umfassend eine Trennlage mit einer Trennoberfläche und einer hinteren Oberfläche und eine Klebstoffschicht mit einer oberen und unteren Oberfläche, wobei die obere Oberfläche der Klebstoffschicht mit der Trennoberfläche der Trennlage in trennbarem Kontakt ist;
Aufbringen eines Musters aus einem nicht-klebenden Material auf die untere Oberfläche der Klebstoffschicht; und
Einbetten des nicht-klebenden Materials in die Klebstoffschicht.

21. Verfahren nach Anspruch 20, ferner umfassend das Aufbringen eines Obermaterials auf die untere Oberfläche der Klebstoffschicht.

## Revendications

1. Article adhésif comprenant :
une pellicule frontale ayant une surface avant et une surface arrière ;
une couche continue d'adhésif ayant une surface supérieure et une surface inférieure et des bords d'extrémité, la surface supérieure de l'adhésif étant amenée à adhérer à la surface arrière de la pellicule frontale ; et
un motif de formes de matière non-adhésive incorporé dans la surface supérieure de la couche d'adhésif, chacune desdites formes de matière non-adhésive ayant une surface supérieure, les surfaces supérieures des formes de matière non-adhésive sont de même niveau ou en dessous du plan de la surface supérieure de la couche d'adhésif, et un revêtement anti-adhésif ayant une surface anti-adhésive, ladite surface anti-adhésive étant amenée à adhérer à la surface inférieure de la couche d'adhésif, la surface anti-adhésive du revêtement anti-adhésif ayant une surface texturée, en particulier une texture aléatoire ou une finition à motifs, et la surface inférieure de la couche d'adhésif ayant une surface texturée correspondant à la surface texturée du revêtement anti-adhésif.

2. Article adhésif selon la revendication 1, dans lequel les formes de matière non-adhésive ont une épaisseur moyenne de 30 nanomètres à 100µ.

3. Article adhésif selon la revendication 1 ou la revendication 2, dans lequel la matière non-adhésive comprend une encre durcissable aux ultraviolets ou une matière non-adhésive poreuse qui comprend en particulier un élastomère.

4. Article adhésif selon l'une quelconque des revendications 1 à 3, dans lequel le motif de formes de matière non-adhésive comprend plusieurs points, lignes ou combinaison de ceux-ci.

5. Article adhésif selon la revendication 4, dans lequel les lignes de matière non-adhésive ont une largeur moyenne de 12 µ à 250µ et une épaisseur moyenne de 30 nanomètres à 100 µ.

6. Article adhésif selon la revendication 4 ou la revendication 5, dans lequel au moins 50 % des lignes croisent les bords d'extrémité de la couche d'adhésif.

7. Article adhésif selon les revendications 4, 5 ou 6, dans lequel les différentes lignes forment un motif de grille.

8. Article adhésif selon l'une quelconque des revendications 1 à 7, dans lequel la couche d'adhésif comprend un adhésif sensible à la pression ou un adhésif thermocollant.

9. Article adhésif selon l'une quelconque des revendications 1 à 8, dans lequel l'article est enroulé de telle sorte que la surface inférieure ou l'adhésif est en contact adhésif avec la surface avant de la pellicule frontale.

10. Article adhésif selon la revendication 9, dans lequel la surface avant de la pellicule frontale a une surface anti-adhésive.

11. Article adhésif selon l'une quelconque des revendications 1 à 10, dans lequel la surface anti-adhésive du revêtement anti-adhésif a une matière particulaire non-adhésive distribuée de façon aléatoire sur celle-ci.

12. Article adhésif selon la revendication 11, dans lequel la matière particulaire non-adhésive distribuée de façon aléatoire est au moins partiellement incorporée dans la surface anti-adhésive.

13. Article adhésif selon l'une quelconque des revendications 1 à 10, dans lequel la surface anti-adhésive du revêtement anti-adhésif a une matière non-adhésive imprimée sur celle-ci.

14. Article adhésif selon la revendication 13, dans lequel la matière non-adhésive imprimée sur la surface anti-adhésive du revêtement anti-adhésif est incorporée dans la surface anti-adhésive.

15. Article adhésif selon l'une quelconque des revendications 1 à 14, comprenant en outre une seconde couche d'adhésif ayant une surface supérieure et une surface inférieure, ladite surface inférieure étant amenée à adhérer à la surface avant de la pellicule frontale.

16. Article adhésif selon la revendication 15, dans lequel un motif de formes de matière non-adhésive est incorporé dans la surface inférieure de la seconde couche d'adhésif, chacune desdites formes de matière non-adhésive ayant une surface inférieure, les surfaces inférieures des formes de matière non-adhésive étant de même niveau ou au-dessous du plan de la surface inférieure de la seconde couche d'adhésif.

17. Article adhésif comprenant :
un revêtement anti-adhésif ayant une surface anti-adhésive et une surface arrière, tel que défini ci-dessus ;
une couche continue d'adhésif, telle que définie ci-dessus, et ayant une surface supérieure et une surface inférieure et des bords d'extrémité, la surface supérieure de l'adhésif étant amenée à adhérer à la surface anti-adhésive du revêtement anti-adhésif ; et
un motif de formes de matière non-adhésive, tel que défini ci-dessus, et qui est incorporé dans la surface inférieure de la couche d'adhésif, chacune desdites formes de matière non-adhésive ayant une surface inférieure, les surfaces inférieures des formes de matière non-adhésive étant de même niveau, au-dessus, ou en-dessous du plan de la surface inférieure de la couche d'adhésif, la surface arrière du revêtement anti-adhésif ayant un revêtement anti-adhésif sur celle-ci, le revêtement anti-adhésif ayant une valeur de détachement plus élevée que celle de la surface anti-adhésive.

18. Article adhésif selon la revendication 17, dans lequel l'article est enroulé de telle sorte que la surface inférieure à motifs de l'adhésif est en contact adhésif avec la surface arrière du revêtement anti-adhésif.

19. Article adhésif selon la revendication 17 ou la revendication 18, dans lequel la surface inférieure de la couche d'adhésif a une matière particulaire non-adhésive distribuée de façon aléatoire incorporée dans celle-ci.

20. Procédé de fabrication d'un article adhésif selon les revendications 17 à 19, comprenant les étapes consistant à :
fournir une structure comprenant un revêtement anti-adhésif ayant une surface anti-adhésive et une surface arrière, et une couche d'adhésif ayant des surfaces supérieure et inférieure, la surface supérieure de la couche d'adhésif étant en contact détachable avec la surface anti-adhésive du revêtement anti-adhésif ;
appliquer un motif d'une matière non-adhésive sur la surface inférieure de la couche d'adhésif ; et
incorporer la matière non-adhésive dans la couche d'adhésif.

21. Procédé selon la revendication 20, comprenant en outre l'application d'une pellicule frontale à la surface inférieure de la couche d'adhésif.
